# EUROPÄISCHE PATENTSCHRIFT

(11) **EP 2 924 349 B1**
(45) Veröffentlichungstag und Bekanntmachung des Hinweises auf die Patenterteilung: **21.12.2016**
(21) Anmeldenummer: 15161429.4
(22) Anmeldetag: 27.03.2015
(51) Int. Cl.: F21V 7/00, F21S 8/04, F21V 8/00, F21Y 103/10, F21Y 115/10

(54) **Vollflächig erleuchtete Leuchte**
LIGHT LIT OVER ITS ENTIRE SURFACE
ÉCLAIRAGE ENTIÈREMENT PLAT

(30) Priorität: 28.03.2014 DE 102014104464
(43) Veröffentlichungstag der Anmeldung: 30.09.2015
(73) Patentinhaber: Trilux GmbH & Co. KG, 59759 Arnsberg (DE)
(72) Erfinder: Ganzer, Bernd, 58675 Hemer (DE); Metken, Andreas, 59425 Unna (DE)
(74) Vertreter: Lippert, Stachow & Partner

(56) Entgegenhaltungen:
- DE-U1-202011 000 598
- US-A1- 2008 304 288
- US-A1- 2010 254 121
- US-A1- 2011 286 241

## Beschreibung

Die Erfindung betrifft eine Leuchte, mit einem Halterahmen, mindestens ausgebildet zur Halterung einer LED-Leiste, einem plattenförmigen Störstellenlichtleiter, einem oberhalb des Störstellenlichtleiters angeordneten plattenförmigen Reflektor, und einer unterhalb des Störstellenlichtleiters angeordneten Entblendungsvorrichtung. Der von der LED-Leiste erzeugte Lichtstrom bzw. das Licht strahlt seitlich in eine Kante des Störstellenlichtleiters ein und wird durch die Störstellen in einem definierten Verhältnis in einen nach unten strahlenden direkten und einen nach oben strahlenden indirekten Lichtstrom aufgeteilt. Durch den Reflektor wird der nach oben strahlende indirekte Lichtstrom aber letztendlich auch nach unten auf die Sehaufgabe gerichtet. Weil der Lichtstrom bzw. das Licht von der Kante in den Störstellenlichtleiter eintritt wird bei dieser Art von Leuchten auch von Kanteneinstrahlung gesprochen.

Beleuchtungsanordnungen für den Innenbereich werden üblicherweise in die Wand oder Decke integriert, daran vorgesehen oder hängen als Pendelleuchten von der Decke herab. Pendelleuchten haben häufig ein rechteckiges, nach unten offenes Gehäuse, durch welches das direkte Licht auf die primäre Sehaufgabe trifft. An der Oberseite oder an den Enden des Leuchtengehäuses ist eine Aufhängung vorgesehen.

Der Störstellenlichtleiter und die Entblendungsvorrichtung sind vorzugsweise als durchsichtige oder teildurchsichtige Kunststoffplatten ausgebildet, die in Einbaulage von dem Halterahmen eingefasst bzw. aufgenommen sind, der Halterahmen umschließt also den Reflektor, den darunter angeordneten Störstellenlichtleiter und die wiederum darunter angeordnete Entblendungsvorrichtung. In Einbaulage vertikal erstreckend sind an den der Innenseite des Halterahmens den Platten zugewandte LED-Leisten vorgesehen, also Leiterplatten mit darauf in linearer Richtung angeordneten LEDs, welche als Lichterzeugungsvorrichtung für die Leuchte fungieren. Die Störstellen in dem Störstellenlichtleiter umfassen üblicherweise auf einer Oberfläche aufgebrachte Strukturen zur Realisierung der gewünschten Lichtlenkung, insbesondere durch Lasern, Heißprägen oder auch Aufdrucken gewünschter Vertiefungen oder Ablenkungsstrukturen. Unterhalb des Störstellenlichtleiters ist eine als diffuse Milchglasscheibe angeordnet, welche als Entblendungsvorrichtung fungiert, also Lichtstrahlen mit einem spitzeren Winkel als 60 Grad mit der Horizontalen herausfiltert bzw. beschränkt.

Bei den bekannten Leuchten tritt das Licht somit aus der nach unten gerichteten Lichtaustrittsöffnung aus dem Gehäuse aus, welche der durch den Störstellenlichtleiter definierten Ebene entspricht. Um direkte Einsicht auf das Leuchtmittel und dadurch verursachte Blendung zu vermeiden, ist die Lichtaustrittsöffnung in Strahlrichtung des direkten Lichtanteils mit einer Entblendungsvorrichtung ausgestattet, die z. B. als ein Lamellenraster, ein Lochblech oder auch eine diffuses Licht erzeugende Milchglasscheibe ausgebildet sein kann.

Es sind weiterhin Platten bekannt, die auf der Oberfläche Mikroprismen umfassen. An diesen Mikroprismen wird das Licht abgelenkt. Bei Einsatz einer solchen Mikroprismenplatte in der Lichtaustrittsöffnung eines Leuchtengehäuses wird eine Blendung des Betrachters am besten vermieden. Nachteilig bei diesen Platten ist, dass diese leicht verschmutzen und verstauben. Verunreinigungen und Fingerabdrücke sind dauerhaft auf der Oberfläche sichtbar. Die Handhabung der häufig scharfkantigen Platten kann zu Verletzungen führen.
Bei der Mikroprismenplatte ist eine Kanteneinstrahlung gänzlich unerwünscht, weil dann die gewünschte Entblendung des Lichts nicht mehr in allen Fällen garantiert werden kann, also eine Lichtstrahlung oberhalb von einem Winkel von 60 Grad mit der Horizontalen unterbindet. Andererseits ist eine Mikroprismenplatte wegen den besseren Entblendungseigenschaften unbedingt gewünscht. US 2011/286241 A1 offenbart eine gattungsgemäße Leuchte, bei der eine Anordnung optischer Filme, die einen Prismenfilm umfassen kann, auf der Lichtaustrittsfläche eines Störstellen Lichtleiter angebracht ist.
Ausgehend von diesem Stand der Technik liegt der Erfindung die Aufgabe zugrunde, diese Nachteile zumindest teilweise zu vermeiden und insbesondere eine Leuchte mit Kanteneinstrahlung vorzusehen, welche über ihre gesamte Lichtaustrittfläche Licht abstrahlt und als Entblendungsvorrichtung eine Prismenplatte einsetzt.

Die Erfindung betrifft eine Leuchte gemäß Anspruch 1.

Der Einsatz eines Störstellenlichtleiters ist insbesondere für Leuchten mit Kanteneinstrahlung interessant, weil ohne eine solche Störstellenstruktur das seitlich an der Kante in den Lichtleiter eingekoppelte Licht sofort aus dem Lichtleiter ausgekoppelte würde, sodass die Leuchtdichte am Rand sehr hoch dann aber zur Mitte des Lichtleiters rasch abnehmen würde. Solche "Leuchtspitzen" sind aber ungewünscht, insbesondere für Büroleuchten, wo derartige Leuchtspitzen Reflektionen auf dem Arbeitsplatz, insbe sondere dem Monitor hervorrufen. Insbesondere für Sehaufgaben im Bürobereich ist eine besonders homogene Leuchtdichte im Sinne einer gleichmäßigen Leuchtdichte über die gesamte Lichtaustrittsfläche wünschenswert. Dieses wird mithilfe der Störstellenstruktur verwirklicht, wobei die Anzahl der Punkte pro Fläche zur Mitte der Fläche hin zunimmt bzw. die Größe der Punkte größer wird, um eine stärkere Lichtauskopplung zu bewirken.

Erfindungsgemäß wird diese Aufgabe bei einer Leuchte der eingangs genannten Art, bei der die Entblendungsvorrichtung als Prismenplatte ausgebildet ist und bei der eine Lichtsperre vorgesehen ist, welche eine Lichteinstrahlung in eine Kante der Prismenplatte verhindert, dadurch gelöst, dass die Lichtwand als Abstandshalter ausgebildet ist, welche die Prismenplatte vom Störstellen Lichtleiter in Einbaulage in vertikaler Richtung beabstandet. Die eingesetzte Prismenplatte verwirklicht eine Lichtverteilungskurve, welche eine Vorzugsrichtung und eine im Vergleich zu einer Lambertverteilung engere Abstrahlcharakteristik aufweist.

Durch die Lichtsperre, genauer gesagt die Kanteneinstrahlungsverhinderungsmittel, können nun also die lichttechnisch eindeutig vorteilhaften Prismenplatten als Entblendungseinrichtung unterhalb der Störstellenlichtleiterplatte eingesetzt werden, die mit deutlich geringeren Lichtverlusten als Milchglasscheiben verbunden sind, eine wesentlich genauere Lichtlenkung auf die Sehaufgabe ermöglichen und wesentlich filigraner im Aufbau sind als Raster. Insofern realisiert die erfindungsgemäße Ausbildung deutlich verbesserte lichttechnische Eigenschaften und räumt gleichzeitig vom Design in der Gestaltung weite Spielräume ein.

Bei der einfachsten Ausführungsform umfasst die Lichtsperre eine Kantenabdeckung für die Prismenplatte, z.B. in Form einer Leiste oder auch nur eines Aufklebers.

Erfindungsgemäß ist die Lichtsperre ausgebildet als Abstandshalter, welcher in Einbaulage die Prismenplatte von dem Störstellenlichtleiter in vertikaler Richtung beabstandet, und zwar vorzugsweise so wenig wie möglich, also nur zur Vermeidung einer ungewollten Berührung zwischen den Platten, welche die gewollte Strahlungscharakteristik des Störstellenlichtleiters negativ beeinflussende Druckstellen hervorrufen könnte. Praktisch beträgt der Abstand nach Möglichkeit nur wenige zehntel Millimeter.

Vorzugsweise ist der Abstandshalter als ein Steg unmittelbar an dem Halterahmen ausgebildet, vorzugsweise angrenzend an den Bereich der LED-Platine als Auflagesteg für den Störstellenlichtleiter, und fungiert gleichzeitig als lichttechnische Abschirmeinheit der Kante der Prismenplatte. Der Abstandhalter bildet eine lichtdichte Wand, auf welcher oberseitig der Störstellenlichtleiter aufliegt und welche gleichzeitig die seitliche Kante der Prismenplatte lichttechnisch vor Kanteneinstrahlung verdeckt. Bei einem die Platten umfänglich einfassenden Halterahmen ist der Abstandshalter vorzugsweise ebenfalls umlaufend an dem Halterahmen zur vollumfänglichen Auflage des Störstellenlichtleiters und lichtdichten Abschirmung der Prismenplatte vorgesehen.

Bei einer Weiterentwicklung ist die Höhe des Abstandshalters zur Anpassung an verschiedenen Kombinationen von Störstellenlichtleitern und Prismenplatten höhenverstellbar ausgebildet.

Vorzugsweise kann dieses als ein umlaufender Absatz an dem Halteprofil ausgebildet sein.

Der Störstellenlichtleiter kann aus unterschiedlichen geeigneten optischen Materialien bestehen, vorzugsweise aus Plexiglas oder auch aus PMMA, welches eine hohe Transparenz, hohe Orientierungsarmut, Spannungsfreiheit und hohe Homogenität aufweist. Die Störstellen sind vorzugsweise an der in Einbaulage oberen Seite der Störstellenlichtleiterplatte vorgesehen und können z.B. erzeugt werden durch Lasern, Bedrucken, Heißprägen oder Laminieren.

Die Prismenplatte kann die Prismen entweder an der in Einbaulage unteren Seite, in Einbaulage oberen Seite oder an der Unter- und der Oberseite aufweisen, je nachdem welche Entblendung bei der jeweiligen Sehaufgabe realisiert werden soll.

Der oberhalb des Störstellenlichtleiters ausgebildete Reflektor ist vorzugsweise als gekantetes und/oder tiefgezogenes Reflektorblech ausgebildet, welches einen mittleren, topfartig abgesenkten Abschnitt aufweist, der gegenüber einem seitlichen oder umlaufenden Rand bzw. Flansch abgesenkt ist und mit seinem unteren Ende nur wenige zehntel Millimeter oberhalb des Störstellenlichtleiters endet, diesen aber nicht berührt, um keine ungewollten Störstellen zu erzeugen.

Vorzugsweise ist dieser Reflektor als Blechprofil ausgebildet, das mit einem pigmentierten, hoch reflektierenden Lack, vorzugsweise in weißer Farbe lackiert ist, um eine hohe, aber gleichzeitig auch diffuse Reflektion ohne Leuchtspitzen zu erzielen. Dieser topfartige Reflektor schließt somit den oberen Bauraum der Leuchte, wobei diese Vertiefung des Reflektors als Aufnahmeraum für elektrische und/oder elektronische Komponenten fungieren kann, die zusätzlich durch eine abnehmbare Abdeckung verschließbar ausgebildet sein kann. Durch die geometrische Ausgestaltung und die Absenkung erhöht der Reflektor zudem die Torsionssteifigkeit und damit die mechanische Stabilität der Leuchte, also die Steifigkeit in Längsrichtung gegen Durchbiegung und/oder Verdrehung. Der Reflektor lenkt Streulicht, also nach oben strahlendes Licht auf die Sehaufgabe nach unten.

Ein weiterer, getrennter Aspekt der Entwicklung betrifft den Schutz der seitlich neben dem Störstellenlichtleiter angeordneten LED-Leiste gegen Beschädigung durch zu hohen Druck, z.B. durch Anpressen der seitlichen Kante des Störstellenlichtleiters gegen die LEDs. Durch unterschiedliche Wärmeausdehnungskoeffizienten der Materialien des Störstellenlichtleiters und des Halterahmens, also des Kunststoffes des Störstellenlichtleiters und Metalls des Halterahmens, kann es durchaus vorkommen, dass die grundsätzlich zur Reduzierung der lichttechnischen Verlustleistung möglichst nah an die Kante des Störstellenlichtleiters angeordnete LED-Leiste bei Erwärmung der Gesamtanordnung ungewünscht hoher Druck von 10N und mehr der Kante des Störstellenlichtleiters auf die LED-Leiste ausgeübt wird, welches die LEDs zerstören, mindestens aber deren Lebensdauer deutlich reduzieren kann. Ein weiterer Aspekt der Entwicklung besteht darin, eine möglichst einfache, kostengünstige und verlässliche Lösung zur verlässlichen Vermeidung zu hohen Druckes bei Erwärmung auf die LEDs vorzusehen. Die erfindungsgemäße Lösung dieses Problems, die insofern völlig getrennt von der bislang beschriebenen Lösung zu sehen ist, sieht die Anordnung von Dioden auf der die LEDs tragenden Leiterplatte zwischen den LEDs also in den LED-Zwischenräumen vor. Diese Dioden können einfach auf der Leiterplatte angeordnet sein, also in der üblichen Weise vollautomatisch bestückt und befestigt werden, müssen aber nicht notwendigerweise elektrisch angeschlossen sein, da sie die Sicherungs- bzw. Abstandsfunktion für die LEDs der LED-Leiste realisieren müssen aber nicht notwendigerweise elektronische Funktionen.

Bei der Entwicklung der Erfindung hat sich ferner gezeigt, dass die Anordnung dieser "Abstandsdioden" (oder "Distanzdioden") an den Stellen besonders zweckdienlich ist, an denen die Materialpaarung zwischen dem Störstellenlichtleiter aus Kunststoff und dem Halterahmen, vorzugsweise Aluminium, besteht und sie in den elastischeren Bereichen zwischen den LEDs der LED-Leiste angeordnet sind, so dass diese Abstandsdioden durch die federnden Eigenschaften des Rahmens bei längerem Biegeweg bei einer Ausdehnung des Störstellenlichtleiters in Längsrichtung ein ausreichendes Rückweichen des Rahmens im Bereich von 0 - 0,5mm ermöglichen. Vorzugsweise werden zwar Dioden als Abstandshalter verwendet, jedoch ist dieses nicht zwingend. Vielmehr können alle günstigen und ausreichend am Markt verfügbaren Bauteile als Abstandshalter eingesetzt werden, welche in den automatisierten Bestückungsprozess der Platinen mit elektrischen und/oder elektronischen Komponenten gut integrierbar sind. Bei der Entwicklung der Erfindung hat sich ferner gezeigt, dass diese Abstandshalter vorzugsweise gegenüber dem mittleren Bereich des Störstellenlichtleiters angeordnet sind, wo sich der Störstellenlichtleiter bei Wärmeausdehnung besonders stark ausdehnt.

Die Abstandsdioden sind vorzugsweise zwischen den LEDs angeordnet, können sich aber zusätzlich oberhalb des Niveaus der Dioden nach oben erstrecken.

In den folgenden ausführlichen Beschreibungen wird auf die beigefügten Zeichnungen Bezug genommen, die Teil dieser bilden und in denen zur Veranschaulichung spezifische Ausführungsformen gezeigt sind, in der die Erfindung ausgeübt werden kann. In dieser Hinsicht wird Richtungsterminologie wie etwa "oben", "unten", "vorne", "hinten", "vorderes", "hinteres", usw. in Bezug auf die Orientierung der beschriebenen Figur(en) verwendet. Da Komponenten von Ausführungsformen in einer Anzahl verschiedener Orientierung positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Die folgende ausführliche Beschreibung ist nicht im einschränkenden Sinne aufzufassen. Im Rahmen dieser Beschreibung werden die Begriffe "verbunden", "angeschlossen" sowie "integriert" verwendet zum Beschreiben sowohl einer direkten als auch einer indirekten Verbindung, eines direkten oder indirekten Anschlusses sowie einer direkten oder indirekten Integration. In den Figuren werden identische oder ähnliche Elemente mit identischem Bezugszeichen versehen, soweit dieses zweckmäßig ist.

Weitere Einzelheiten, Vorteile und Merkmale der Erfindung lassen sich dem nachfolgenden Teil der Beschreibung entnehmen, in dem ein Ausführungsbeispiel der erfindungsgemäßen Vorrichtung anhand von drei Zeichnungen näher erläutert wird. Es zeigen:
- Figur 1:: einen vergrößerten Querschnitt durch eine erfindungsgemäß ausgebildete Leuchte;
- Figur 2:: eine vergrößerte Stirnansicht bzw. Draufsicht auf die Leuchte gemäß Figur 1.

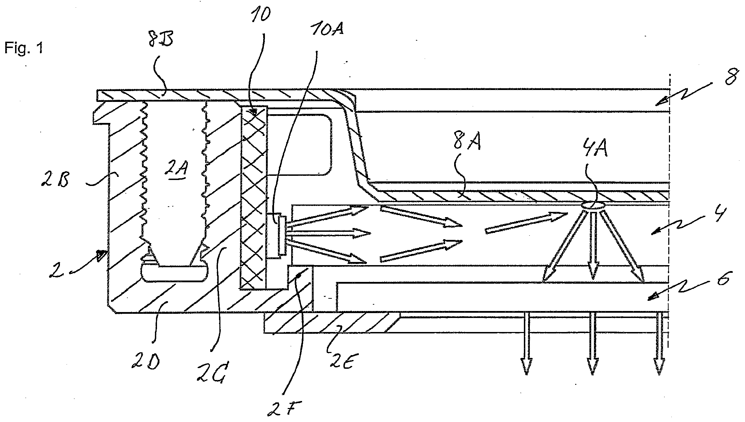

Gemäß Figur 1 umfasst die erfindungsgemäße Leuchte somit im einen Halterahmen 2, einen von dem Halterahmen 2 gehaltenen, plattenartigen Störstellenlichtleiter 4, einer unterhalb von dem Störstellenlichtleiter ebenfalls in dem Halterahmen gehaltenen Prismenplatte 6 sowie eines oberhalb des Störstellenlichtleiters 4 angeordneten Topfreflektor 8. Die dargestellte Leuchte hat eine Gesamthöhe von etwas weniger als 20 mm, wobei die Höhe des Topfreflektors 8 etwa ein Drittel dieser Höhe ausmacht. Die Leuchte ist insofern besonders flach und filigran.

Der Halterahmen 2 ist als umlaufender, also alle Seiten des Störstellenlichtleiters 4, die Prismenplatte 6 und den Topfreflektor 8 einfassender Halterahmen 2 ausgebildet, der in der vorliegenden bevorzugten Ausführungsform als stranggepresstes Aluminium-Profil ausgebildet ist, das einen Schraubkanal 2A umfasst, der seinerseits aus einem Außenschenkel 2B und einem Innenschenkel 2C definiert wird, die am unteren Ende von einem nach innen ragenden Horizontalschenkel 2D begrenzt werden und sich an seinem freien, nach innen gerichteten Ende unter Bildung eines Absatzes in einen Auflageflansch 2E für die Prismenplatte 6 erstreckt. Ferner ist an dem oberen freien Ende des Horizontalschenkels 2D ein Auflagesteg 2F für die Störstellenstrukturplatte 4 ausgebildet.

An dem der Störstellenlichtleiter 4 und der Prismenplatte 6 zugewandten Innenschenkel 2C des Schraubkanals ist eine in Längserstreckungsrichtung der Leuchte und quer zur Ebene der Figur 1 erstreckende LED-Platine 10 angeordnet, die an ihrem unteren Drittel linear zueinander in Betrachtungsrichtung in Reihe angeordnete LEDs 10A umfasst.

Die geometrische Ausgestaltung des Horizontalschenkels 2D und des Auflagestegs 2F ist so gestaltet, dass der Abstand zwischen den LEDs 10A und der Störstellenstrukturplatte 4 in Einbaulage möglichst gering gehalten ist zur Reduzierung der lichttechnischen Verlustleistung und vorzugsweise maximal 1 bis 2 mm beträgt.

Oberhalb des Störstellenlichtleiters 4 ist der topfförmig ausgebildeter Topfreflektor 8 angeordnet, der vorliegend aus einem mit einem weißen, hoch reflektierenden Lack gestrichenen, tiefgezogenen Stahlblech besteht. Durch das Tiefziehen wird der Topfreflektor 8 unterteilt in einen in Einbaulage unteren Topfabschnitt 8A, dessen unteres Ende um etwa um 7 Millimeter nach unten versetzt ist, von einem im Verhältnis zu diesem Topfabschnitt 8A nach oben versetzten Auflagerand 8B, der in Einbaulage oberseitig auf dem Halterahmen 2 aufliegt und bis zum Ende des Außenschenkels 2B des Halterrahmens 2 verläuft, um einen bündigen Abschluss auf der Oberseite der Leuchte zu realisieren.

Der Störstellenlichtleiter 4 weist an seiner Oberseite mehrere, an die zu realisierende Sehaufgabe angepasste Störstellen 4A auf, welche die kundenindividuell bestimmte Lichtverteilungskurve realisieren, und vorzugsweise eine Verteilung des über die LED-Platine 10 in die Kanten eingestrahlten Lichtstroms von 60 % nach und 40 % nach oben verwirklicht. Von diesen Störstellen 4A ist Figur 1 nur eine schematisch dargestellt. In Realität sind diese Störstellen 4A wesentlich kleiner und an vielen Stellen angeordnet und dabei vorzugsweise an der Oberseite des Störstellenlichtleiters 4.

Das nach unten strahlende Licht bzw. der Lichtstrom wird sodann von der Prismenplatte 6 gerichtet zur Erzielung der gewünschten Entblendung.

Diese Entblendung wird weiterhin dadurch verbessert, dass der erfindungsgemäße Auflagesteg 2F als lichttechnische Barriere zur wirksamen Unterbindung von Kanteneinstrahlung in die Prismenplatte 6 fungiert, also die Kanten lichttechnisch abschirmt.

Im Betrieb, also im eingeschalteten Zustand, tritt somit aus der gesamten Prismenplatte 6 Licht aus, was bis auf den Rand die gesamte nach unten sichtbare Oberfläche der Leuchte darstellt. Insofern wird in diesem Zusammenhang von einer vollflächig erleuchteten Leuchte gesprochen.

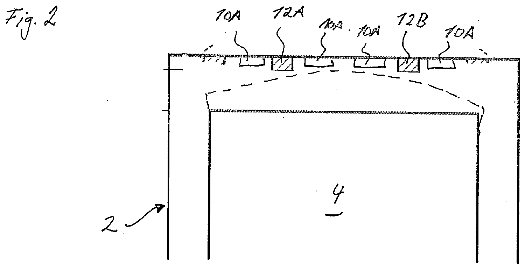

Die Figur 2 zeigt eine vergrößerte Draufsicht des Stirnendes der Leuchte gemäß Figur 1 in schematisierter Form und verdeutlicht, dass der Halterahmen 2 insgesamt aus vier an den Stoßstellen auf Gehrung gesetzten Profilen zusammengesetzt ist. Die Verbindung der Profile und deren Anordnung stellt Stand der Technik dar und ist nicht Gegenstand dieser Erfindung. Wichtig ist hingegen die Anordnung der Distanzdioden 12A, 12B an den Stirnseiten des kurzen Schenkels des Halterahmens 2. In der Figur 2 ist in durchgezogener Linie die Ausdehnung des Störstellenlichtleiters 4 im abgekühlten Zustand dargestellt. Erst aufgrund der von der LED-Leiste 10 bewirkten Erwärmung der Störstellenlichtleiters 4 dehnt diese sich unregelmäßig auch in Längsrichtung aus, wobei diese unter Umständen auch die gestrichelte Linie am Stirnende als Ausdehnung aufweisen kann. Insbesondere tritt demnach eine Längenausdehnung in der Mitte des Störstellenlichtleiters 4 auf, die in Wechselwirkung mit der geringeren Wärmeausdehnung des vorliegend aus Aluminium gefertigten Halterahmens 2 zum Anstoß des Störstellenlichtleiters 4 gegen die LEDs 10A der LED-Leiste 10 bewirken und zur Zerstörung oder Beschädigung der LEDs 10A führen könnte. Zum Abfangen dieser ungewünschten Druckspannung auf die LEDs 10A der LED-Leiste 10 sind in dem Zwischenrahmen zwischen den LEDs 10A der LED-Leiste 10 mehrere Distanzdioden 12A, 12B angeordnet, welche in Einbaulage deutlich über die Höhe der LEDs 10A nach innen vorragen, also über die Bauhöhe der LEDs 10A und somit wirksam ungewünschte Druckspannung des Störstellenlichtleiters 4 bei Wärmeausdehnung auf die LEDs 10A der LED-Leiste 10 verhindern.

Insgesamt weist die gesamte Leuchte eine Gesamthöhe von etwa 20 Millimetern auf, ist also filigran im Sinne von besonders flach ausgebildet. Diese kann insofern als Einbau-, Anbau-, aber auch als Pendelleuchte eingesetzt werden. Durch die flache Bauweise kann diese aber auch besonders gut in existierende abgehängte Decken und die ansonsten zur Aufnahme von Deckenplatten ausgebildete Rahmen eingesetzt werden.

Vorzugsweise sind der Störstellenlichtleiter 4 und die Prismenplatte 6 als einstückig extrudierte Kunststoffplatten aus einem lichttechnischen Kunststoff ausgebildet, besonders bevorzugt aus PMMA. Die Prismenstruktur der Prismenplatte umfasst vorliegend Mikroprismen an der Unterseite, kann diese aber auch an der Oberseite oder, je nach Anwendungsfall und gewünschter Entblendung, an der Ober- und der Unterseite aufweisen.

Zur Reduzierung der lichttechnischen Verluste bei gleichzeitiger Verbesserung der Entblendung schlägt die Erfindung somit bei einer eine Leuchte mit einem Halterahmen 2, ausgebildet zur Halterung von LEDs 10A, einem Störstellenlichtleiter 4, einem oberhalb des Störstellenlichtleiters 4 angeordneten Topfreflektor 8 und einer unterhalb des Störstellenlichtleiters 4 angeordneten Entblendungsvorrichtung, wobei ein von den LEDs 10A erzeugter Lichtstrom in eine Kante des Störstellenlichtleiters 4 einstrahlt und durch die Störstellen in einen nach unten strahlenden direkten und einen nach oben strahlenden indirekten Lichtstrom aufgeteilt wird, erfindungsgemäß vor, die Entblendungsvorrichtung als Prismenplatte 6 auszubilden und an dem Halterahmen als Lichtwand ausgebildete Verhinderungsmittel vorzusehen, welches einen Lichteintritt in eine Kante der Prismenplatte 6 verhindern.

Der Gegenstand der vorliegenden Erfindung ergibt sich nicht nur aus dem Gegenstand der einzelnen Patentansprüche, sondern aus der Kombination der einzelnen Patentansprüche untereinander. Alle in den Unterlagen - einschließlich der Zusammenfassung - offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

### Bezugszeichenliste

- 2: Halterahmen
- 2A: Schraubkanal
- 2B: Außenschenkel
- 2C: Innenschenkel
- 2D: Horizontalschenkel
- 2E: Auflageflansch
- 2F: Auflagesteg
- 4: Störstellenlichtleiter
- 4A: Störstelle
- 4B: Kantenverlauf
- 6: Prismenplatte
- 8: Topfreflektor
- 8A: Topfabschnitt
- 8B: Auflagerand
- 10: LED-Platine
- 10A: LED
- 12A: Distanzdiode
- 12B: Distanzdiode

## Patentansprüche

1. Leuchte mit einem Halterahmen (2), ausgebildet zur Halterung von LEDs (10A), eines Störstellenlichtleiters (4), einem oberhalb des Störstellenlichtleiters (4) angeordneten Reflektor (8), und einer unterhalb des Störstellenlichtleiters (4) angeordneten Entblendungsvorrichtung, wobei ein von den LEDs (10A) erzeugter Lichtstrom in eine Kante des Störstellenlichtleiters (4) einstrahlt und durch die Störstellen in einem gewünschten und definierten Verhältnis in einen nach unten strahlenden direkten und einen nach oben strahlenden indirekten Lichtstrom aufgeteilt wird, wobei die Entblendungsvorrichtung als Prismenplatte (6) ausgebildet ist und wobei als Lichtwand ausgebildete Verhinderungsmittel vorgesehen sind, welche einen Lichteintritt in eine Kante der Prismenplatte (6) verhindern, **DADURCH GEKENNZEICHNET, dass** die Lichtwand als Abstandhalter ausgebildet ist, welcher die Prismenplatte vom Störstellenlichtleiter in Einbaulage in vertikaler Richtung beabstandet.

2. Leuchte nach Anspruch 1, **DADURCH GEKENNZEICHNET, dass** der Abstandhalter als Steg (2F) unmittelbar am Halterahmen (2) ausgebildet ist.

3. Leuchte nach einem der vorhergehenden Ansprüche, **DADURCH GEKENNZEICHNET, DASS** der Reflektor (8) ein lackiertes Blech unter Verwendung eines hoch-reflektierenden pigmentierten Lackes umfasst.

4. Leuchte nach Anspruch 3, **DADURCH GEKENNZEICHNET, DASS** der Reflektor (8) einen Topfabschnitt und einen Auflagerand (8B) aufweist.

5. Leuchte nach einem der vorhergehenden Ansprüche, **DADURCH GEKENNZEICHNET, DASS** die LEDs (10A) auf einer LED-Platine (10) angeordnet sind und zwischen den LEDs (10A) mindestens eine Distanzdiode (12) angeordnet ist.

6. Leuchte nach Anspruch 5, **DADURCH GEKENNZEICHNET, DASS** die Distanzdiode (12) in Abhängigkeit von den Materialeigenschaften des Halterahmens (2) und/oder des Störstellenlichtleiters (4) angeordnet ist.

7. Leuchte nach Anspruch 6, **DADURCH GEKENNZEICHNET, DASS** die Distanzdiode in einem elastischen Bereich des Halterahmens (2) angeordnet ist.

## Claims

1. Light, comprising a holding frame (2) constructed for holding LEDs (10A), an impurity light guide (4), a reflector (8) disposed above said impurity light guide (4), and a glare suppression device disposed below said impurity light guide (4), wherein a luminous flux generated by said LEDs (10A) radiates into an edge of said impurity light guide (4) and is divided by said impurities into a direct luminous flux radiating downwards and an indirect luminous flux radiating upwards, at a desired and defined ratio, wherein said glare suppression device is formed as a prism plate (6) and wherein preventing means formed as a light sheet are provided, which prevent light from entering into an edge of said prism plate (6), **characterized in that** said light sheet is formed as a spacer that spaces said prism plate from said impurity light guide in the vertical direction in the installed position.

2. Light according to claim 1, **characterized in that** said spacer is formed as a crosspiece (2F) directly on said holding frame (2).

3. Light according to one of the preceding claims, **characterized in that** said reflector (8) comprises a painted sheet using a highly reflective pigmented paint.

4. Light according to claim 3, **characterized in that** said reflector (8) includes a bowl section and a supporting edge (8B).

5. Light according to one of the preceding claims, **characterized in that** said LEDs (10A) are arranged on a LED board (10) and that at least one spacer diode (12) is interposed between said LEDs (10A).

6. Light according to claim 5, **characterized in that** said spacer diode (12) is arranged in dependence on the material properties of said holding frame (2) and/or said impurity light guide (4).

7. Light according to claim 6, **characterized in that** said spacer diode (12) is arranged in an elastic region of said holding frame (2).

## Revendications

1. Éclairage, comprenant un cadre de maintien (2) conçu pour le maintien de DELs (10A), d'un conducteur optique de défaut (4), d'un réflecteur (8) disposé au-dessus du conducteur optique de défaut (4), et d'un dispositif de protection contre l'éblouissement disposé au-dessous du conducteur optique de défaut (4), dans lequel un flux lumineux généré par les DELs (10A) rayonne dans un bord du conducteur optique de défaut (4) et est divisé par les défauts, dans un rapport souhaité et défini, en un flux lumineux direct rayonnant vers le bas et un flux lumineux indirect rayonnant vers le haut, le dispositif de protection contre l'éblouissement étant réalisé comme une plaque à prismes (6), et dans lequel des moyens d'empêchement réalisés comme un plan de lumière sont prévus empêchant l'entrée de lumière dans le bord de la plaque de prismes (6), **caractérisé en ce que** le plan de lumière est réalisé comme un espaceur pour espacer, en position de montage, la plaque de prismes du conducteur optique de défaut dans la direction verticale.

2. Éclairage selon la revendication 1, **caractérisé en ce que** l'espaceur est réalisé comme une âme (2F) directement sur le cadre de maintien (2).

3. Éclairage selon l'une des revendications précédentes, **caractérisé en ce que** le réflecteur (8) comprend une tôle laquée utilisant une laque pigmentée à haute réflexion.

4. Éclairage selon la revendication 3, **caractérisé en ce que** le réflecteur (8) présente une partie de pot et un bord d'appui (8B).

5. Éclairage selon l'une des revendications précédentes, **caractérisé en ce que** les DELs (10A) sont disposées sur un panneau DEL (10) et qu'entre les DELs (10A) est disposée au moins une diode d'entretoise (12).

6. Éclairage selon la revendication 5, **caractérisé en ce que** la diode d'entretoise (12) est arrangée en fonction des propriétés du matériau du cadre de maintien (2) et/ou du conducteur optique de défaut (4).

7. Éclairage selon la revendication 6, **caractérisé en ce que** la diode d'entretoise est arrangée dans une zone élastique du cadre de maintien (2).
